**Europäisches Patentamt**

(19) **European Patent Office**

**Office européen des brevets**

(11) Veröffentlichungsnummer: **0 211 992 B1**

(12) **EUROPÄISCHE PATENTSCHRIFT**

(45) Veröffentlichungstag der Patentschrift: **26.10.88**

(51) Int. Cl.⁴: **F 16 F 9/04, F 16 F 9/36**

(21) Anmeldenummer: **85110619.5**

(22) Anmeldetag: **23.08.85**

(54) **Schwingungsisolatoranordnung.**

(43) Veröffentlichungstag der Anmeldung:
**04.03.87 Patentblatt 87/10**

(45) Bekanntmachung des Hinweises auf die Patenterteilung:
**26.10.88 Patentblatt 88/43**

(84) Benannte Vertragsstaaten:
**AT BE CH DE FR GB IT LI NL SE**

(56) Entgegenhaltungen:
**DE - A - 2 928 296**
**DE - C - 210 944**
**DE - C - 386 184**
**FR - A - 920 507**
**GB - A - 2 131 517**
**US - A - 3 812 938**

**IBM TECHNICAL DISCLOSURE BULLETIN, Band 21, Nr. 5, Oktober 1978, Seite 1765, New York, US; J.M. RITTER: "Variable damping supporter"**

(73) Patentinhaber: **Rudolf Schrepfer AG, Eigenheimstrasse 22, CH-8700 Küsnacht-Zürich (CH)**

(72) Erfinder: **Schrepfer, Rudolf, Eigenheimstrasse 22, CH-8700 Küsnacht (CH)**
Erfinder: **Wolfensberger, Ulrich, Speerweg 9, CH-8618 Oetwil am See (CH)**

(74) Vertreter: **Blumbach Weser Bergen Kramer Zwirner Hoffmann Patentanwälte, Radeckestrasse 43, D-8000 München 60 (DE)**

## Beschreibung

Die Erfindung betrifft eine Schwingungsisolatoranordnung nach dem Oberbegriff des Patentanspruchs 1.

Schwingungsisolatoren dienen vornehmlich dazu, die Übertragung von Schwingungen und/oder Stössen von der sie erzeugenden Quelle auf andere Vorrichtungen, Einrichtungen, Gebäudeteile usw. zu unterbinden. Einer der häufigsten Anwendungsfälle ist die Lagerung einer Maschine auf einem Fundament. Es gibt Maschinen, die selbst Schwingungen und/ oder Stösse erzeugen, wobei verhindert werden soll, dass diese Schwingungen oder Stösse auf das Fundament übertragen werden. Andererseits gibt es äusserst empfindliche Maschinen oder Apparaturen, die vor Schwingungen oder Stössen, denen das Fundament ausgesetzt ist, geschützt werden sollen.

Solche Schwingungsisolatoren sind in einer grossen Vielfalt bekannt. Sie enthalten ein Federelement, das zusammen mit der Masse der zu isolierenden Maschine oder Apparatur ein Schwingungssystem bildet, dessen Eigenfrequenz gegenüber den Frequenzen, deren Übertragung unterbunden werden soll, um ein Mindestmass verschieden sein muss. Meistens versucht man die Eigenfrequenz des Schwingungssystems durch entsprechende Auswahl der Federkonstanten im Schwingungsisolator so tief wie möglich zu legen, also kleiner als die möglichen Frequenzen der Störschwingungen zu machen. In vielen Anwendungsfällen kann man jedoch nicht ausschliessen, dass zumindest vorübergehend Betriebszustände auftreten, bei denen Störschwingungen erregt werden, die im Bereich der Eigenfrequenz des Schwingungssystems liegen. Ein solcher Fall kann beispielsweise beim Anfahren oder Abbremsen einer schwingungsisolierten Maschine auftreten. Damit es nicht bei Übereinstimmung von Störschwingungsfrequenz und Eigenfrequenz des Schwingungssystems zu einer Schwingungsverstärkung und möglicherweise zu Beschädigungen kommt, ist eine Dämpfung des Schwingungssystems erforderlich.

Aus dem Buch «Fundamente und Tragkonstruktionen für Maschinen», Bauverlag GmbH. Wiesbaden, 1972, Seiten 262, 263 ist ein Schwingungsisolator bekannt, der zwei ineinandergreifende und gegeneinander verschiebbare Gehäuseteile umfasst, die zwischen sich eine Schraubenfeder aufnehmen. Als Dämpfungseinrichtung ist zwischen den gegeneinander bewegten Flächen der beiden Gehäuseteile ein Reibbelag vorgesehen. Mit Hilfe einer Stellschraube kann der Druck zwischen dem Reibbelag und dem ihm gegenüber beweglichen Gehäuseteil variiert und damit die Dämpfung eingestellt werden. Mit einer solchen Reibungsdämpfung kann ein Aufschaukeln der Schwingungen im Resonanzfall verhindert werden. Die Reibungsdämpfung ist jedoch unabhängig von der Frequenz bzw. der Relativgeschwindigkeit zwischen den aneinanderreibenden Flächen. Bei dem beschriebenen bekannten Schwingungsisolator wirkt die Dämpfung daher auch bei Störfrequenzen, die weit entfernt von der Eigenfrequenz des Schwingungssystems liegen. Angestrebt wird dagegen eine möglichst grosse Dämpfung im Bereich der eigenfrequenz und eine möglichst kleine Dämpfung im Bereich ausserhalb der Eigenfrequenz.

Aus der Firmendruckschrift «Application Selection Guide» der Firma Barry Division Barry Wright Corp., 7000 Pleasant Street, Watertown, Mass. 02172, 1974, Seiten A16, A17 ist ein Schwingungsisolator nach dem Oberbegriff des Patentanspruchs 1 bekannt. Dieser Schwingungsisolator enthält in einem topfartigen Gehäuse einen mit einer Drosselöffnung versehenen Balg, dessen eines Ende am Boden des Gehäuses aufliegt und dessen anderes Ende mit einem aus dem Gehäuse herausragenden Montageteil verbunden ist. Innerhalb des Balges befindet sich eine Feder.

Die bei diesem bekannten Schwingungsisolator gewählte Luftdämpfung hat den Vorteil, dass das Dämpfungsmass frequenz- bzw. amplitudenabhängig ist. Sie besitzt gegenüber der Reibungsdämpfung den weiteren Vorteil einer grösseren Verschleissfreiheit. Sie besitzt allerdings den Nachteil, dass das Luftpolster im Balg auch als Federelement wirkt, dessen Federkonstante stark von der Auslenkung abhängt, so dass die Dämpfungseinrichtung einen schwierig bestimmbaren Einfluss auf die Eigenfrequenz des Schwingungssystems ausübt. Wie eingangs erwähnt, soll die Eigenfrequenz des Schwingungssystems in den meisten Fällen möglichst tief liegen. Tiefste Frequenzen der Grössenordnung von etwa 3 Hz erreicht man mit Stahlfedern. Wenn nun die Federkonstante der Dämpfungseinrichtung zusätzlich berücksichtigt werden muss, wird es praktisch kaum noch möglich, Eigenfrequenzen der Grössenordnung von 3 bis 5 Hz zu erzielen.

Eine Schwingungsisolatoranordnung nach dem Oberbegriff des Patentanspruchs 1 ist aus der Druckschrift GB-A-2 131 517 bekannt. Diese bekannte Anordnung enthält innerhalb der beiden relativ zueinander beweglichen Gehäuseteile einen die Luftkammer bildenden Balg, dessen Inneres über eine Drosselöffnung und ein Rückschlagventil mit der Atmosphäre verbunden ist. Durch die Anordnung eines Rückschlagventils wird erreicht, dass entweder in der einen oder in der anderen Schwingungsrichtung oder Stossrichtung eine praktisch sofortige Entlüftung bzw. Belüftung der Luftkammer erfolgt. Hierdurch wird die Federwirkung des Luftpolsters in der Luftkammer und damit der Einfluss auf die Eigenfrequenz des Schwingungssystems deutlich verringert. Bei der bekannten Schwingungsisolatoranordnung sind die beiden Gehäuseteile direkt aneinander geführt, so dass zwischen ihnen eine Brücke für Körperschallübertragung gebildet wird. Hierdurch wird die Funktion der Schwingungsisolierung beeinträchtigt.

Es sind auch Schwingungsisolatoren bekannt, bei denen eine hydraulische Dämpfungseinrichtung verwendet wird, deren Einfluss auf die Eigenfrequenz des Schwingungssystems geringer als bei der pneumatischen Dämpfungeinrichtung ist. Die hydraulische Dämpfungseinrichtung erfordert aber zwei Hydraulikkammern, zwischen denen der ständige Austausch der Hydraulikflüssigkeit erfolgt. Hierdurch ergibt sich ein entsprechend komplizierter Aufbau des Schwingungsisolators.

Aufgabe der Erfindung ist es, eine Schwingungsisolatoranordnung mit einer Luftdämpfung gemäss dem Oberbegriff des Patentanspruchs 1 zu schaffen, die eine gute Isolierwirkung aufweist, bei welcher der Einfluss der Dämpfungeinrichtung auf die Eigenfrequenz des Schwingungssystems möglichst gering ist und die einen einfachen Aufbau besitzt.

Diese Aufgabe wird durch die kennzeichnenden Merkmale des Patentanspruchs 1 gelöst. Bei dieser Lösung sorgt der Dichtring zwischen den beiden Gehäuseteilen für eine Abdichtung, so dass eine Luftkammer zwischen den Gehäuseteilen gebildet wird, ohne dass ein zusätzlicher Balg erforderlich wäre. Zur Erzielung einer möglichst geringen Reibungsdämpfung ist der Dichtring so ausgebildet, dass er auf den gegenüberliegenden Dichtflächen der Gehäuseteile abrollt.

Die Erfindung wird nachfolgend unter Bezug auf die Zeichnungen anhand von Ausführungsbeispielen näher erläutert. Es zeigen:

Fig. 1 in einer schematischen Querschnittsansicht den Aufbau eines bevorzugten Ausführungsbeispiels der Erfindung, und

Fig. 2 eine Schnittansicht längs der Linie II-II in Fig. 1.

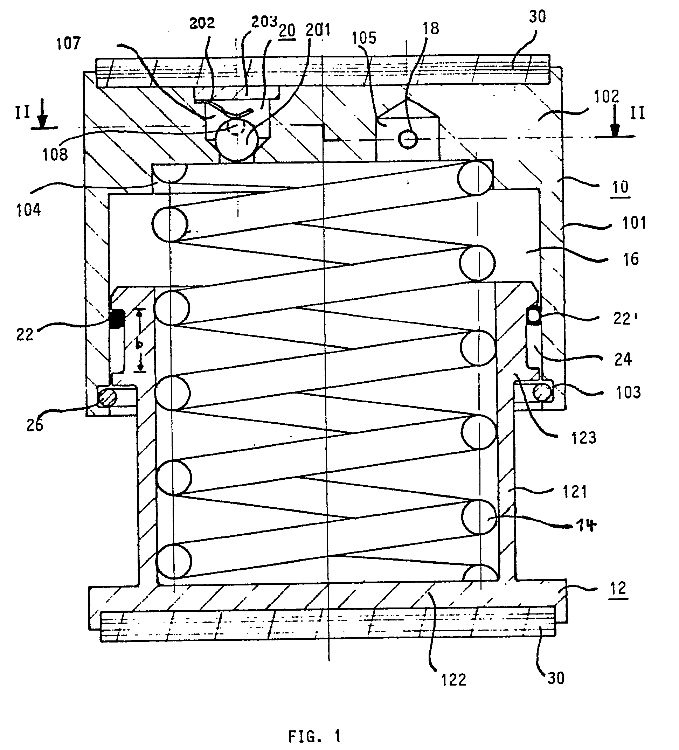

Der in Fig. 1 schematisch im Querschnitt gezeigte Schwingungsisolator besitzt ein Gehäuse, das sich aus einem oberen Gehäuseteil 10 und einem unteren Gehäuseteil 12 zusammensetzt. Beide Gehäuseteile sind im wesentlichen topfartig ausgebildet und vorzugsweise zylindrisch. Sie setzen sich je aus einem hohlzylindrischen Abschnitt 101 bzw. 121 und einem diesen an einem Ende schliessenden Deckel 102 bzw. 122 zusammen. Der hohlzylindrische Abschnitt und der Deckel sind beim dargestellten Ausführungsbeispiel jeweils einstückig. Der Abschnitt 121 des Gehäuseteils 12 ist über seine Länge und ausgehend vom offenen Ende in eine Zone grösseren Aussendurchmessers und eine Zone kleineren Aussendurchmessers unterteilt. Der Übergang zwischen diesen beiden Zonen bildet eine Stufe 123. Der grössere Aussendurchmesser des hohlzylindrischen Abschnitts 121 des Gehäuseteils 12 ist etwas kleiner als der Innendurchmesser des hohlzylindrischen Abschnitts 101 des Gehäuseteils 10. Dadurch kann das untere Gehäuseteil 12 mit seinem offenen Ende in das obere Gehäuseteil 12 gesteckt werden. Damit die beiden Gehäuseteile nach der Montage nicht versehentlich auseinanderfallen, ist in unmittelbarer Nähe des offenen Endes des oberen Gehäuseteils 10 in dessen Innenfläche eine Nut 103 ausgebildet, die einen Sprengring 26 aufnimmt. Dieser Sprengring 26 stellt einen Anschlag dar, gegen den die Stufe 123 des Gehäuseteils 12 anstösst, wenn die beiden Gehäuseteile am weitesten auseinandergezogen sind.

In der Aussenfläche der Zone grösseren Aussendurchmessers des unteren Gehäuseteils 12 ist eine Nut 24 ausgebildet. Die Nut 24 nimmt einen Dichtring auf, der eine luftdichte Verbindung zwischen den gegeneinander beweglichen Gehäuseteilen schafft. In Fig. 1 sind auf der linken Seite und der rechten Seite zwei verschiedene Ausführungsformen des Dichtrings dargestellt, nämlich auf der linken Seite ein O-Ring 22, auf der rechten Seite ein Schlauchring 22'. Die Breite b der Nut 24 ist grösser als der Durchmesser des O-Rings 22 bzw. als die Höhe des Schlauchrings 22' und so bemessen, dass sich der Dichtring 22 (22') über den ganzen Bewegungshub auf den gegenüberliegenden Dichtflächen, das heisst der Innenfläche des hohlzylindrischen Abschnitts 101 auf der einen Seite und dem Grund der Nut 24 auf der anderen Seite abrollt. Hierdurch wird erreicht, dass durch den Dichtring eine möglichst geringe Reibung verursacht wird. Diese kann bei Verwendung eines Schlauchrings als Dichtring gegebenenfalls noch geringer als bei Verwendung eines O-Rings sein. Grundsätzlich besteht auch die Möglichkeit, die den Dichtring (22 (22') aufnehmende Nut 24 in der Innenfläche des hohlzylindrischen Abschnitts 101 anstelle der Aussenfläche des hohlzylindrischen Abschnitts 121 auszubilden.

In der dem hohlzylindrischen Abschnitt 101 zugewandten Unterseite des Deckels 102 befindet sich eine vorzugsweise zylindrische Vertiefung 104, die auf den zylindrischen Hohlraum des hohlzylindrischen Abschnitts 121 ausgerichtet ist und im wesentlichen gleichen Durchmesser wie dieser besitzt.

Zwischen dem Boden der Vertiefung 104 und der dem hohlzylindrischen Abschnitt 121 zugewandten Oberseite des Deckels 122 erstreckt sich eine Schraubenfeder 14, vorzugsweise eine Stahlfeder. Sie stellt das eigentliche Federelement des Schwingungsisolators dar.

Der von den beiden Gehäuseteilen 10 und 12 eingeschlossene und durch den Dichtring 22 bzw. 22' luftdicht abgeschlossene Hohlraum stellt zugleich die Luftkammer 16 einer Dämpfungeinrichtung dar. Diese Luftkammer steht einerseits über eine Drosselöffnung 18 und andererseits über ein Rückschlagventil 20 mit der Atmosphäre in Verbindung.

Im Boden der Vertiefung 104 befindet sich ein Sackloch 105, welches von einer senkrecht zu seiner Achse verlaufenden durchgehenden Bohrung 106 im Deckel 102 durchsetzt wird, wie am besten aus Fig. 2 zu ersehen. Die Bohrung 106 ist auf der einen Seite des Sacklochs 105 mit einem Gewinde versehen und nimmt eine Stellschraube 28 auf, die mit einem verjüngten Ende 281 in das von der Bohrung 106 in der Wand des Sacklochs 105 gebildete Loch hineinragt, welches die eigentliche Drosselöffnung 18 darstellt. Der Strömungsquerschnitt dieser Drosselöffnung hängt davon ab, wie weit das verjüngte Ende 281 der Stellschraube 28 in die Drosselöffnung 18 hineinragt. Durch Verstellen der von aussen zugänglichen Stellschraube 28 lässt sich das Dämpfungsmass variieren.

Das Rückschlagventil 20 wird beim dargestellten Ausführungsbeispiel von einer den Deckel 102 in Richtung der Federachse und parallel zum Sackloch 105 durchsetzenden Bohrung 107 gebildet, die abgestuft ist und zur Luftkammer 16 hin einen geringeren Durchmesser als am entgegengesetzten Ende aufweist. Eine Kugel 201 ist in der abgestuften Bohrung 107 als Ventilelement angeordnet und mit Hilfe einer Zungenfeder 202 so vorgespannt, dass der Übergang vom durchmesserkleineren zum durchmessergrösseren Teil der Bohrung 107 durch die Kugel verschlossen wird. An dem der Luftkammer 16 abgewandten Ende wird die Bohrung nach Montage von Kugel 201 und Feder 202 mittels einer Platte 203 luftdicht verschlossen. Die Bohrung 107 wird von einer senkrecht zu ihr und parallel zur Bohrung 106 verlaufenden Bohrung 108 durchsetzt. Wenn bei entsprechendem Druck in der Luftkammer 16 die Kugel 201 gegen die Kraft der Feder 202 von dem Ventilsitz abgehoben wird, dann steht die Luftkammer 16 über die Bohrung 108 mit der Atmosphäre in Verbindung. Der dabei wirkende Strömungsquerschnitt ist vorzugsweise gross gegenüber demjenigen der Drosselöffnung 18 und kann bei Bedarf einstellbar gemacht werden. Ebenso kann bei Bedarf die auf die Kugel 201 einwirkende Federkraft einstellbar gemacht werden.

Beim beschriebenen Ausführungsbeispiel sind Drosselöffnung 18 und Rückschlagventil 20 getrennt voneinander angeordnet. Es wäre auch möglich, beide miteinander zu kombinieren.

In eine Vertiefung der dem hohlzylindrischen Abschnitt 101 abgewandten Oberseite des Deckels 102 ist beim dargestellten Ausführungsbeispiel eine Antivibrationsplatte 30 eingelegt. Eine ebensolche Platte befindet sich an der Unterseite des Deckels 122. Diese Platten sind nicht unbedingt erforderlich.

Wenn der Schwingungsisolator mit dem beschriebenen Aufbau auf ein Fundament gestellt und eine zu isolierende Apparatur daraufgestellt wird, dann werden die beiden Gehäuseteile 10 und 12 abhängig von der Masse der daraufgestellten Apparatur in eine statische Gleichgewichtsstellung einfedern. Bei Schwingungen um diese Gleichgewichtsstellung ergeben sich unterschiedliche Wirkungen je nach Schwingungsrichtung. Eine Kompression der Gehäuseteile öffnet das Rückschlagventil 20, so dass die Luft aus der Luftkammer 16 praktisch drosselfrei entweichen kann. Bei der folgenden Expansion dagegen wird das Rückschlagventil 19 geschlossen, und die Luftkammer 16 kann jetzt nur noch verzögert durch die Drosselöffnung 18 belüftet werden.

Wie bereits eingangs erwähnt, kann abhängig vom Anwendungsfall die Wirkungsrichtung des Rückschlagventils auch umgekehrt sein, so dass es bei Expansion der Gehäuseteile öffnet.

Wenn im Rahmen dieser Beschreibung vereinfachend von Luft die Rede ist, dann sollen dadurch auch beliebige andere Gase erfasst werden, deren Verwendung sich im einzelnen Fall anbieten mag. Ebenso ist unter Atmosphäre die unmittelbare Umgebung des Schwingungsisolators zu verstehen, bei der es sich durchaus auch um einen in sich geschlossenen und gegenüber der eigentlichen Atmosphäre abgeschlossenen Raum handeln kann.

Die in Fig. 1 dargestellte Feder 14 stellt eine von mehreren Möglichkeiten der Realisierung des eigentlichen Federelements dar. Insbesondere kommen je nach Anwendungsfall auch mehrere konzentrisch angeordnete Schraubenfedern oder andere Federarten in Betracht.

**Patentansprüche**

1. Schwingungsisolatoranordnung mit einem ersten und einem zweiten Gehäuseteil (10, 12), die ineinandergreifen und relativ zueinander beweglich sind, wenigstens einer zwischen den Gehäuseteilen angeordneten Feder (14) und einer Dämpfungseinrichtung, die wenigstens eine Luftkammer in den Gehäuseteilen umfasst, welche über eine Drosselöffnung (18) mit der Atmosphäre verbunden ist und deren Volumen sich bei Relativbewegung zwischen den beiden Gehäuseteilen (10, 12) ändert, wobei die Luftkammer über ein Rückschlagventil (20) mit der Atmosphäre verbunden ist, dadurch gekennzeichnet, dass die Luftkammer von den Gehäuseteilen (10, 12) gebildet ist und zur Abdichtung zwischen den Gehäuseteilen ein Dichtring (22, 22') derart angeordnet ist, dass er bei Bewegung der Gehäuseteile gegeneinander auf den gegenüberliegenden Dichtflächen der Gehäuseteile abrollt.

2. Schwingungsisolatoranordnung nach Anspruch 1, dadurch gekennzeichnet, dass der Strömungsquerschnitt des Rückschlagventils (20) gross ist gegenüber dem der Drosselöffnung (18).

3. Schwingungsisolatoranordnung nach Anspruch 1, dadurch gekennzeichnet, dass das Rückschlagventil (20) bei einer gegeneinander erfolgenden Bewegung zwischen den Gehäuseteilen (10, 12) öffnet.

4. Schwingungsisolatoranordnung nach Anspruch 1, dadurch gekennzeichnet, dass der Strömungsquerschnitt der Drosselöffnung (18) von aussen einstellbar ist.

5. Schwingungsisolatoranordnung nach Anspruch 1, dadurch gekennzeichnet, dass der Dichtring (22, 22') in einem von den gegenüberliegenden Dichtflächen der Gehäuseteile (10, 12) gebildeten Ringraum liegt.

6. Schwingungsisolatoranordnung nach Anspruch 1, dadurch gekennzeichnet, dass es sich bei dem Dichtring um einen O-Ring (22) oder um einen Schlauchring (22') handelt.

**Claims**

1. A vibration-isolating arrangement comprising first and second housing portions (10, 12) which engage one into the other and which are movable relative to each other, at least one spring (14) disposed between the housing portions and a damping means which includes at least one air chamber in the housing portions, the air chamber being communicated with the atmosphere by way of a throttle opening (18) and the volume thereof changing upon relative movement between the two housing portions (10, 12), wherein the air chamber is communicated with the atmosphere by way of a non-return valve (20), characterised in that the air chamber is formed by the housing portions (10, 12) and for the purposes of providing a seal between the housing portions a sealing ring (22, 22') is arranged in such a way that when the housing portions move relative to each other the sealing ring rolls against the oppositely disposed sealing surfaces of the housing portions.

2. A vibration-isolating arrangement according to claim 1, characterised in that the flow cross-section of the non-return valve (20) is large in comparison with that of the throttle opening (18).

3. A vibration-isolating arrangement according to claim 1, characterised in that the non-return valve (20) opens upon movement towards each other as between the housing portions (10, 12).

4. A vibration-isolating arrangement according to claim 1, characterised in that the flow cross-section of the throttle opening (18) is adjustable from the outside.

5. A vibration-isolating arrangement according to claim 1, characterised in that the sealing ring (22, 22') is disposed in an annular space formed by the oppositely disposed sealing surfaces of the housing portions (10, 12).

6. A vibration-isolating arrangement according to claim 1, characterised in that the sealing ring is an O-ring (22) or a tubular ring (22').

## Revendications

1. Dispositif isolateur de vibrations comportant des premier et second éléments de carter (10, 12) qui s'emboîtent l'un dans l'autre et sont déplaçables l'un par rapport à l'autre, au moins un ressort (14) disposé entre les éléments de carter, et un dispositif amortisseur qui comporte au moins une chambre à air située dans les éléments de carter et est reliée à l'atmosphère par l'intermédiaire d'une ouverture d'étranglement (18), et dont le volume varie lors du déplacement relatif entre les deux éléments de carter (10, 12), la chambre à air étant reliée à l'atmosphère par l'intermédiaire d'une soupape de retenue (20), caractérisé par le fait que la chambre à air est formée par les éléments de carter (10, 12) et que, pour réaliser l'étanchéité entre les éléments de carter, une bague d'étanchéité (22, 22') est disposée de manière à rouler sur les surfaces d'étanchéité, situées en vis-à-vis, des éléments de carter lors du déplacement de ces derniers l'un par rapport à l'autre.

2. Dispositif isolateur de vibrations suivant la revendication 1, caractérisé par le fait que la section transversale de passage de la soupape de retenue (20) est grande par rapport à l'ouverture d'étranglement (18).

3. Dispositif isolateur de vibrations suivant la revendication 1, caractérisé par le fait que la soupape de retenue (20) s'ouvre dans le cas d'un déplacement réciproque entre les éléments de boîtier (10, 12).

4. Dispositif isolateur de vibrations suivant la revendication 1, caractérisé par le fait que la section transversale d'écoulement de l'ouverture d'étranglement (18) est réglable de l'extérieur.

5. Dispositif isolateur de vibrations suivant la revendication 1, caractérisé par le fait que la bague d'étanchéité (22, 22') est située dans un espace annulaire formé par les surfaces d'étanchéité, situées en vis-à-vis, des éléments de carter (10, 12).

6. Dispositif isolateur de vibrations suivant la revendication 1, caractérisé par le fait qu'en ce qui concerne la bague d'étanchéité, il s'agit d'un joint torique (22) ou d'une bague tubulaire (22').

FIG. 1